(19) Europäisches Patentamt
European Patent Office
Office européen des brevets

(11) **EP 3 105 808 B1**

(12) **FASCICULE DE BREVET EUROPEEN**

(45) Date de publication et mention
de la délivrance du brevet:
**04.07.2018 Bulletin 2018/27**

(21) Numéro de dépôt: **15705937.9**

(22) Date de dépôt: **10.02.2015**

(51) Int Cl.:
*H01M 8/04746* (2016.01)     *H01M 8/0438* (2016.01)
*H01M 8/04223* (2016.01)     *H01M 8/04119* (2016.01)
*H01M 8/04089* (2016.01)

(86) Numéro de dépôt international:
**PCT/EP2015/052687**

(87) Numéro de publication internationale:
**WO 2015/118161 (13.08.2015 Gazette 2015/32)**

(54) **CIRCUIT DE PURGE D'UNE PILE À COMBUSTIBLE**

SPÜLUNGSKREISLAUF EINER BRENNSTOFFZELLE

PURGE CIRCUIT OF A FUEL CELL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.02.2014 FR 1450986**

(43) Date de publication de la demande:
**21.12.2016 Bulletin 2016/51**

(73) Titulaires:
• **SYMBIOFCELL**
**38000 Grenoble (FR)**
• **Association pour la Recherche et le
Développement
des Méthodes et Processus Industriels
75006 Paris (FR)**

(72) Inventeurs:
• **METKEMEIJER, Rudolf
06530 Peymeinade (FR)**

• **DE GRISARD, Benjamin
26780 Espeluche (FR)**
• **LEROUX, Patrick
06610 Le Cannet (FR)**
• **ACHARD, Patrick
06130 Le Plan de Grasse (FR)**

(74) Mandataire: **Brevalex
95, rue d'Amsterdam
75378 Paris Cedex 8 (FR)**

(56) Documents cités:
EP-A1- 1 018 774     FR-A1- 2 826 782
JP-A- 2007 042 452     JP-A- 2010 232 167
JP-A- 2011 023 228     JP-A- 2011 113 859
US-A1- 2009 075 128

**Description**

**DOMAINE TECHNIQUE ET ART ANTÉRIEUR**

La présente demande concerne le domaine technique des piles à combustible, plus précisément, un dispositif permettant d'alimenter et de purger au moins un compartiment appartenant à une pile à combustible.

Une pile à combustible est un convertisseur d'énergie chimique en énergie électrique, d'utilisation simple et adaptée à de nombreux secteurs économiques, tels que le secteur des transports (véhicules terrestres, aériens, maritime ou fluviaux), ou le secteur résidentiel (générateur d'électricité d'appoint pour des habitations).

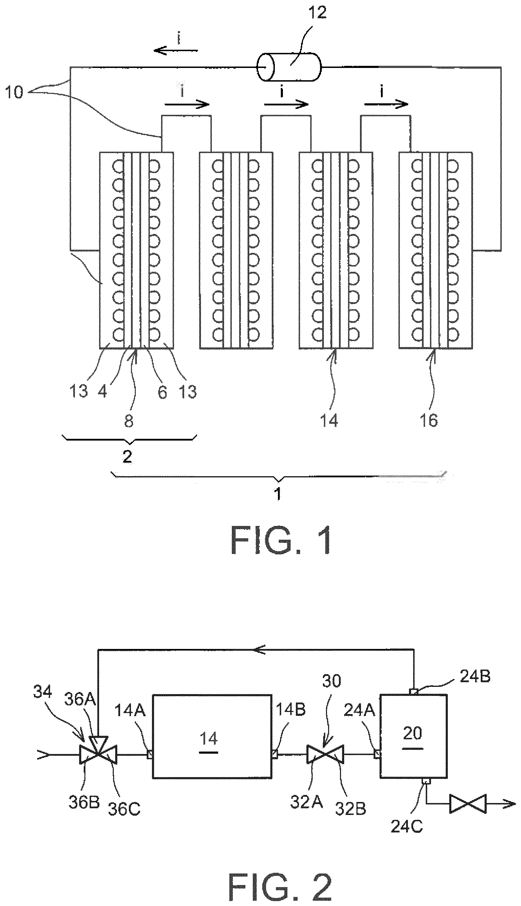

Une pile à combustible 1 comporte au moins une cellule électrochimique 2 comprenant une anode 4 séparée d'une cathode 6 par un électrolyte 8 (figure 1). La cellule électrochimique est alimentée par deux gaz différents, le premier peut par exemple être de l'hydrogène s'oxydant au contact de l'anode, le second de l'oxygène réduit au contact de la cathode selon les réactions électrochimiques suivantes :

$$H_2 \rightarrow 2H^+ + 2e^-$$
<div align="right">Equation 1</div>

$$\frac{1}{2}O_2 + 2H^+ + 2e^- \rightarrow H_2O$$
<div align="right">Equation 2</div>

Les piles à combustible consommant de l'hydrogène sont aussi nommées pile à hydrogène. L'électrolyte 8 aussi appelée membrane, permet de séparer les combustibles introduits dans la cellule électrochimique 2, tout en permettant la circulation des ions hydrogènes produits au niveau de l'anode vers la cathode. L'oxydation de l'hydrogène produit des électrons circulant de l'anode à la cathode via un circuit électrique 10 externe à la cellule 2, de sorte qu'un environnement client 12 connecté au circuit électrique 10 puisse consommer l'électricité produite par la pile. La membrane 8 est réalisée à partir de matériau poreux et électriquement isolant, mais conducteur ionique (par exemple à partir de PTFE). Les réactants sont introduits vers les électrodes par l'intermédiaire de canaux d'alimentation propres à chaque électrode et présents dans des plaques bipolaires 13 délimitant la cellule électrochimique 2. Les canaux d'alimentation permettent également d'évacuer le produit des réactions électrochimiques ci-dessus. Le volume délimité par un canal d'alimentation et une électrode forme un compartiment anodique 14 lorsque l'électrode est l'anode, ou un compartiment cathodique 16 lorsque l'électrode est la cathode (figure 1).

Une cellule électrochimique 2 à hydrogène fournit théoriquement une tension électrique de 1.23 V. En pratique la tension électrique varie de 0.9 V en circuit ouvert à 0.65 V pour une densité de courant allant de 0.7 à 1.5 A/cm$^2$. La tension électrique varie notamment en fonction de la pression partielle des fluides transportant les combustibles dans les compartiments anodique et cathodique. Afin d'obtenir des tensions électriques exploitables pour les utilisations mentionnées ci-dessus, plusieurs cellules électrochimiques 2 sont assemblées en série pour former un ensemble, également appelé « stack ». Une pile électrochimique peut donc comporter plusieurs cellules électrochimiques, alimentées à partir d'un même canal d'alimentation desservant plusieurs compartiments cathodiques ou anodiques.

L'oxygène consommé par les piles à hydrogène est généralement prélevé dans l'environnement de la pile, alors que l'hydrogène doit être stocké dans un réservoir approprié. De ce fait, l'autonomie d'une pile à hydrogène dépend principalement de sa consommation en hydrogène et de la capacité du réservoir de stockage. Il apparait donc essentiel d'optimiser cette consommation pour augmenter l'autonomie et le rendement de la pile. Les performances d'une cellule électrochimique à hydrogène dépendent également du taux d'humidité de la membrane 8 : cette humidité permet une bonne conduction ionique des ions hydrogène à travers la membrane. Mais un taux d'humidité trop important est susceptible de favoriser la formation d'un film liquide à la surface des électrodes, empêchant les réactions électrochimiques ci-dessus de se produire. En d'autres termes, un taux d'humidité trop important, notamment dans le compartiment anodique, dégrade les performances de la cellule électrochimique. Il est alors nécessaire de purger le canal d'alimentation pour abaisser le taux d'humidité.

Les performances d'une cellule électrochimique sont également dégradées par la présence et la stagnation de gaz inertes dans le compartiment anodique 14. Par exemple, l'azote présent dans l'air ambiant amené dans le compartiment cathodique pour fournir l'oxygène à la réaction, peut diffuser à travers la membrane 8, du compartiment cathodique 16 vers le compartiment anodique. Il y a alors un risque d'accumulation de gaz inertes dans le compartiment anodique qui est susceptible de limiter le rendement de la réaction électrochimique de l'équation 1 ci-dessus.

Autrement dit, un excès d'humidité et une concentration de gaz inertes trop importante au niveau du compartiment anodique dégradent les performances et l'autonomie de la cellule électrochimique.

Pour prévenir ces inconvénients, le compartiment anodique peut être régulièrement purgé. L'eau à l'état liquide et les gaz inertes présents dans le compartiment sont par exemple évacués de la cellule électrochimique en faisant varier brutalement le débit d'écoulement d'hydrogène dans la pile.

Le document EP1018774A1 divulgue plusieurs exemples de procédés de purge basés sur ce principe. Notamment, un dispositif de purge d'un compartiment anodique 14 d'une pile à hydrogène comprenant une capacité 20 dont une entrée 24A est connectée par l'intermédiaire d'une vanne de sortie 30 à deux voies (32A, 32B) à une sortie 14B du compartiment anodique 14 (figure 2). La capacité 20 permet de stocker les gaz et l'eau à l'état liquide sortant du compartiment anodique. Une sortie 24B de la capacité est connectée à un première entrée 36A d'une vanne d'entrée 34 à trois voies, la seconde entrée 36B de la vanne est connectée à un circuit d'alimentation en hydrogène et sa sortie 36C est connectée à l'entrée 14A du compartiment anodique 14. Lors du fonctionnement de la pile, la vanne d'entrée 34 est positionnée de manière à connecter le compartiment anodique 14 à un circuit d'alimentation en hydrogène, la vanne de sortie 30 est en position ouverte pour permettre l'évacuation des gaz et de l'eau du compartiment anodique vers la capacité 20. Lorsqu'on souhaite purger le compartiment anodique 14, une première étape consiste à inverser la position de la vanne d'entrée 34 de manière à connecter l'entrée 14A du compartiment anodique à la sortie 24B de la capacité 20. Lors de son fonctionnement, la pile à hydrogène consomme l'hydrogène présent dans la capacité 20, provoquant une baisse de pression dans celle-ci. Lorsque la pression dans la capacité descend en dessous d'une valeur seuil, la vanne de sortie 30 est actionnée selon une seconde étape, de manière à isoler la sortie 14B du compartiment anodique 14 de l'entrée 24A de la capacité 20. Lors d'une troisième étape, la position de la vanne d'entrée 34 est de nouveau modifiée pour connecter le circuit d'alimentation en hydrogène à l'entrée 14A du compartiment anodique, afin d'augmenter la pression dans celui-ci. La quatrième étape permettant de purger le compartiment anodique consiste à ouvrir la vanne de sortie 30, afin de créer une dépressurisation brutale du compartiment anodique 14. La chute de pression dans le compartiment anodique crée un courant de gaz à croissance rapide permettant l'évacuation de l'eau et des gaz présents dans ce compartiment dans la capacité 20. Selon une cinquième et dernière étape, la vanne de sortie 30 est fermée.

Ce dispositif de purge nécessite l'emploi de deux vannes devant être actionnées par un utilisateur ou un dispositif de commande, de façon synchrone, de manière à permettre l'établissement d'un différentiel de pression suffisant entre le compartiment anodique 14 et la capacité 20 pour effectuer la purge. La synchronisation des vannes évolue en fonction de leurs caractéristiques intrinsèques, notamment en fonction du temps de réponse de chaque vanne qui est susceptible de se dégrader lors de leur utilisation. De ce fait, il est nécessaire d'effectuer des contrôles réguliers du dispositif de purge et de corriger la synchronisation des vannes pour permettre une utilisation optimum de ce type de dispositif. De plus, l'utilisation de vannes de conceptions différentes augmente le coût de réalisation et complique l'entretien d'un tel dispositif.

La présente demande vise à proposer un dispositif de purge d'une pile à combustible permettant de résoudre au moins l'un des problèmes mentionnés ci-dessus. Plus précisément, l'invention a pour objectif d'offrir des moyens permettant de purger de façon homogène le compartiment anodique d'une pile à combustible, de façon plus efficace, plus fiable et plus simple.

Le document JP 2010 232167 divulgue un système de pile à combustible, comportant un circuit de recirculation des gaz. Ce circuit de recirculation comprend un séparateur gaz/liquide positionné entre deux valves anti-retour. Le document FR 2 826 782 divulgue un procédé et une installation de purge de l'eau incluse dans le circuit d'hydrogène d'un ensemble de production d'énergie à base de pile à combustible.

Le document US 2009/075128 divulgue une pile à combustible et un procédé de contrôle de cette pile.

## EXPOSÉ DE L'INVENTION

La présente demande vise à résoudre au moins l'un des problèmes techniques mentionnés ci-dessus, avec un circuit de purge pour purger un compartiment anodique d'une cellule électrochimique d'une pile à combustible, ce circuit comportant :

- des moyens pour contenir un gaz de récupération, comprenant une première entrée et une première sortie ;
- un premier clapet anti-retour connecté à la première sortie des moyens pour contenir un gaz de récupération de manière à empêcher l'introduction d'un gaz dans ces moyens par la première sortie ;
- un second clapet anti-retour connecté à la première entrée des moyens pour contenir un gaz de récupération, de manière à empêcher l'évacuation d'un gaz, à partir de ces moyens, par la première entrée ;
- un capteur de pression apte à mesurer la pression d'un fluide présent dans ledit circuit ;
- des moyens permettant ou interdisant une circulation d'un gaz vers l'entrée dudit compartiment, en fonction de données de pression dudit capteur de pression.

Les moyens pour contenir un gaz de récupération comportent une capacité ou un réservoir apte à stocker un fluide. Les moyens pour contenir un gaz de récupération permettent à celui-ci de s'homogénéiser, et donc de réaliser un mélange de l'hydrogène et des gaz inertes, tel que l'azote. Ce dernier, qui est ensuite réinjecté dans le compartiment anodique, est moins nocif, pour le fonctionnement de la pile, après avoir été mélangé avec l'hydrogène. Ce mélange homogène d'azote et d'hydrogène permet d'éviter la présence de zone non alimentée par l'hydrogène due à une stratification hydrogène/gaz neutres impliquant une dégradation irréversible des cellules électrochimiques. Ceci permet en outre de ne pas relâcher d'hydrogène dans l'environnement : relâcher l'azote (ou tout autre gaz neutre) impliquerait, inévitablement, de relâcher également l'hydrogène.

La capacité de stockage de fluide (autrement dit : le volume intérieur des moyens pour contenir un gaz de récupération) est dans le cadre de l'invention au moins égale à 300 ml, par exemple au moins égale à 500 ml, par exemple comprise entre 500 ml et 22 l, de préférence encore entre 500 ml et 5l ou entre 500 ml et 2l, par exemple 1l ou 2l. De préférence, la première entrée et la première sortie des moyens pour contenir un gaz de récupération sont situées dans une partie, dite supérieure, de ces moyens, de manière à ce qu'ils puissent contenir un liquide dans une partie dite inférieure et un gaz dans une partie dite supérieure, et que la première entrée et la première sortie permettent la circulation d'un gaz à travers ces moyens, tout en y confinant le liquide.

Le terme « connecté » désigne tous moyens, dits moyens de connexion, permettant à un fluide de circuler entre deux dispositifs connectés ensemble. Ces moyens de connexion, peuvent par exemple être un canal, ou plusieurs canaux, dont les parois internes sont étanches au fluide. Mais le mélange, mentionné ci-dessus, de l'hydrogène et des gaz inerte, n'est réalisé de manière effective que dans les moyens pour contenir un gaz de récupération (la capacité ou le réservoir), et pas dans les moyens de connexion. Le volume, mentionné ci-dessus, au moins égal à 300 ml, par exemple compris entre 500 ml et 22 l, n'inclue pas le volume interne de ces moyens de connexion, qui relient, d'une part les moyens pour contenir un gaz de récupération et, d'autre part, les 2 clapets. Autrement dit, le volume intérieur des moyens pour contenir un gaz de récupération est monolithique ou monobloc, ou encore connexe, et non pas divisé en volumes séparés de part et d'autre d'un séparateur liquide-gaz. Ces moyens forment un volume unique ou encore monolithique ou monobloc pour mélanger les gaz qui s'écoulent en sortie de compartiment anodique.

La pression mesurée dans le circuit va évoluer en fonction du volume de gaz stocké dans les moyens pour contenir un gaz de récupération. Par conséquent, l'activation, ou l'ouverture et la fermeture des moyens permettant ou interdisant une circulation d'un gaz vers l'entrée dudit compartiment (qu'on peut aussi appeler moyens d'ouverture et de fermeture), va/vont dépendre de l'évolution de ce volume de gaz stocké. Plus le volume de liquide stocké dans les moyens de stockage est important, plus le rythme d'activation des moyens d'ouverture et de fermeture est important (et plus le cycle de purge du compartiment anodique est court). Moins le volume de liquide stocké dans les moyens de stockage est important, moins le rythme d'activation des moyens d'ouverture et de fermeture est important (et plus le cycle de purge du compartiment anodique est long).

Les clapets anti-retour permettent l'écoulement d'un fluide dans le circuit de purge selon un seul sens d'écoulement.

Ils peuvent avoir une pression de tarage choisie minimum - par exemple 50 mbar - pour utiliser au maximum les variations de pression autorisées par une membrane séparant le compartiment anodique d'un compartiment cathodique appartenant à une même cellule électrochimique. En effet, une variation trop large de la pression différentielle dépendante de l'amplitude de variation et de la pression du volume de récupération peut dégrader mécaniquement la membrane des cellules électrochimiques intégrées à la pile à combustible.

Selon une réalisation, le capteur de pression peut être connecté en amont du second clapet, de manière à mesurer la pression d'un fluide s'écoulant ou apte à s'écouler par le second clapet. En d'autres termes, le capteur de pression peut mesurer la pression d'un fluide présent dans un canal connecté en amont du second clapet. Les termes amont et aval désignent le sens d'écoulement d'un fluide à travers le second clapet anti-retour.

Les moyens permettant une circulation d'un gaz vers l'entrée dudit compartiment peuvent comporter une vanne à ouverture très rapide, par exemple une électrovanne, ayant une entrée et une sortie. Une telle vanne peut être ouverte en 0.1s, ou moins.

Un tel circuit de purge peut comporter en outre un raccord, par exemple un raccord à trois branches ou plus, comportant une première branche connectée au premier clapet anti-retour, une deuxième branche et une troisième branche, lesdits moyens permettant une circulation d'un gaz vers l'entrée dudit compartiment étant connectés à la troisième branche du raccord.

Dans un circuit de purge selon l'invention, une sortie dudit compartiment anodique peut être connectée au capteur de pression.

Une entrée dudit compartiment anodique peut être connectée à la seconde branche du raccord, de préférence de manière à permettre à un fluide sortant du compartiment anodique d'être réintroduit dans ledit compartiment par l'intermédiaire du circuit de purge.

De préférence, les moyens permettant ou interdisant une circulation d'un gaz vers l'entrée dudit compartiment :

- permettent une circulation d'un gaz vers l'entrée dudit compartiment, lorsque le capteur de pression mesure une pression inférieure à un seuil minimum (VA),

- ne permettent pas une circulation d'un gaz vers l'entrée dudit compartiment, lorsque le capteur de pression mesure une pression supérieure à un seuil maximum (VB), qui est supérieure à la pression de seuil minimum (VA).

De préférence encore, ces moyens permettant ou interdisant une circulation d'un gaz vers l'entrée dudit compartiment :

- permettent une circulation d'un gaz vers l'entrée dudit compartiment et restent ouverts (et donc permettent la circulation du gaz) quand une augmentation de la pression est recherchée.
- ne permettent pas une circulation d'un gaz vers l'entrée dudit compartiment (et donc interdisent la circulation du gaz) quand une baisse de la pression est recherchée.

Dans un tel circuit de purge un détendeur peut être connecté en amont des moyens permettant ou interdisant une circulation d'un gaz vers l'entrée dudit compartiment, par exemple entre un dispositif d'alimentation en combustible sous pression et une entrée desdits moyens.

Les moyens pour contenir un gaz de récupération peuvent comporter une seconde ouverture pour évacuer au moins une partie de l'eau à l'état liquide présente dans la capacité.

En outre peuvent être prévus des moyens de mesure du volume d'eau liquide présent dans lesdits moyens pour contenir un gaz de récupération.

Des moyens pour commander ladite seconde ouverture peuvent également être prévus, par exemple en fonction de ladite mesure du volume d'eau liquide. Ils comportent par exemple une vanne, par exemple encore une électrovanne.

Dans un tel circuit de purge des moyens peuvent être prévus pour mesurer la fréquence de cycles de purge et pour commander le fonctionnement desdits moyens pour commander ladite seconde ouverture en fonction de cette fréquence. De tels moyens peuvent comporter par exemple un tachymètre permettant de mesurer la fréquence du cycle d'ouverture et de fermeture des moyens permettant l'alimentation du compartiment.

Selon une réalisation, lesdits moyens pour commander ladite seconde ouverture permettent de commander celle-ci sans relâcher dans l'environnement un gaz de récupération.

Un second capteur de pression peut être prévu pour mesurer la pression dans un compartiment cathodique appartenant à la même cellule électrochimique que ledit compartiment anodique.

Les moyens, permettant ou interdisant une circulation d'un gaz vers l'entrée dudit compartiment, en fonction de données de pression dudit capteur de pression, peuvent être commandés en fonction de la différence de pression entre ces deux compartiments.

Un circuit de purge selon l'invention peut connecter plusieurs sorties et plusieurs entrées de plusieurs compartiments anodiques appartenant à une pile à combustible comprenant plusieurs cellules électrochimiques.

Un circuit de purge selon l'invention peut comporter en outre un dispositif d'alimentation en combustible sous pression comprenant de l'hydrogène, connecté à une entrée des moyens permettant ou interdisant une circulation d'un gaz vers l'entrée dudit compartiment.

Un autre aspect de l'invention concerne également un procédé de fonctionnement d'un circuit tel que décrit ci-dessus, comportant :

- la mesure de la pression d'un fluide présent dans ledit circuit, par exemple en amont du second clapet anti-retour ;
- une circulation d'un gaz vers l'entrée dudit compartiment, en fonction de données de pression dudit capteur de pression.

Comme déjà expliqué ci-dessus, il se produit, dans les moyens pour contenir un gaz de récupération, un mélange ou une homogénéisation de l'hydrogène et des gaz inertes, tel que l'azote, qui s'écoulent en sortie de compartiment anodique. L'ensemble de ces gaz peut donc être ensuite réinjecté dans le compartiment anodique, et les gaz inertes, notamment l'azote, sont alors moins nocifs, pour le fonctionnement de la pile, après avoir été mélangé avec l'hydrogène. Ceci permet de ne pas relâcher d'hydrogène dans l'environnement : relâcher l'azote impliquerait, inévitablement, de relâcher également l'hydrogène.

La pression mesurée dans le circuit va évoluer en fonction du volume de gaz stocké dans les moyens pour contenir un gaz de récupération. Par conséquent, la circulation (ou son interruption) de gaz vers l'entrée du compartiment anodique va dépendre de l'évolution de ce volume de gaz stocké. Plus le volume de liquide stocké dans les moyens de stockage est important, plus le rythme de cette circulation (ou le rythme de son début et de sa fin) est important (et plus le cycle de purge du compartiment anodique est court). Moins le volume de liquide stocké dans les moyens de stockage est important, moins le rythme de cette circulation (ou le rythme de son début et de sa fin) est important (et plus le cycle de purge du compartiment anodique est long). Le compartiment peut être alimenté en gaz de récupération lorsque la différence de pression, entre les moyens pour contenir ce gaz de récupération (le gaz contenu dans ces moyens est appelé gaz de récupération), et ledit compartiment anodique est supérieure à la pression de tarage du premier clapet anti-retour.

En fonction de la position du capteur de pression, par exemple lorsque la pression dans le compartiment et dans les moyens pour contenir ce gaz de récupération passe en dessous d'une valeur de pression dite minimum, par exemple celle-définie ci-dessus, les moyens permettant une circulation d'un gaz vers l'entrée dudit compartiment peuvent être ouverts.

L'ouverture des moyens permettant une circulation d'un gaz vers l'entrée dudit compartiment est très rapide, par exemple d'une durée comprise entre 0,1 et 0.5s.

Un front de pression est provoqué par l'ouverture des moyens permettant une circulation d'un gaz vers l'entrée dudit compartiment, par exemple pendant une durée comprise entre 5s et 15s.

Le front de pression provoqué par l'ouverture des moyens permettant une circulation d'un gaz vers l'entrée dudit compartiment peut permettre la fermeture du premier clapet anti-retour, isolant ainsi fluidiquement les moyens pour contenir un gaz de récupération de l'entrée du compartiment anodique.

Ce front de pression peut aussi permettre le déclenchement de l'ouverture du second clapet anti-retour.

Avantageusement, ce front de pression permet d'évacuer de l'eau et des gaz présents dans le compartiment anodique, en direction des moyens pour contenir le gaz de récupération.

Lorsque la différence de pression entre les moyens pour contenir ce gaz de récupération et le compartiment anodique atteint la pression de tarage du second clapet anti-retour, celui-ci peut se fermer de manière à empêcher que des éléments présents dans les moyens pour contenir le gaz de récupération puissent migrer vers le compartiment anodique.

En d'autre terme, lorsque la différence de pression entre le compartiment anodique et les moyens pour contenir le gaz de récupération tend vers la pression de tarage du second clapet anti-retour, celui-ci se ferme.

Les moyens pour contenir le gaz de récupération et le compartiment anodique sont remplis en hydrogène jusqu'à ce que la pression, détectée par le capteur de pression, soit supérieure au seuil de pression prédéterminée, dite pression maximum VB. Au-delà de cette valeur, le capteur de pression commande la fermeture des moyens interdisant une circulation d'un gaz vers l'entrée dudit compartiment.

## BRÈVE DESCRIPTION DES DESSINS

D'autres détails et caractéristiques de l'invention apparaîtront de la description qui va suivre, faite en regard des figures annexées suivantes. Les parties identiques, similaires ou équivalentes des différentes figures portent les mêmes références de façon à faciliter le passage d'une figure à une autre. Les différentes parties représentées sur les figures ne le sont pas nécessairement à échelle uniforme, pour rendre les figures plus lisibles.

La figure 1 représente une vue de coupe d'une pile à combustible comprenant plusieurs cellules électrochimiques.
La figure 2 représente la figure 7 du document EP1018774A1.
La figure 3 représente un exemple de réalisation de l'invention connecté à un compartiment anodique d'une pile à hydrogène.
La figure 4 représente en fonction du temps (t) les variations de pression et de débit d'un fluide circulant dans un dispositif représenté en figure 3.
La figure 5 représente une variante de l'exemple de réalisation représenté en figure 3.
La figure 6 représente une autre variante de l'exemple de réalisation représenté en figure 3.

## EXPOSÉ DÉTAILLÉ DE MODES DE RÉALISATION PARTICULIERS

La présente demande vise à offrir un dispositif de purge permettant de purger un compartiment anodique d'une pile à hydrogène, de façon plus efficace, plus simple et plus fiable. Un exemple de réalisation d'un tel dispositif, complété par plusieurs variantes, est décrit ci-dessous.

Les éléments composant une pile à hydrogène ont été décrits ci-dessus, les références mentionnées ci-après correspondent à cette description.

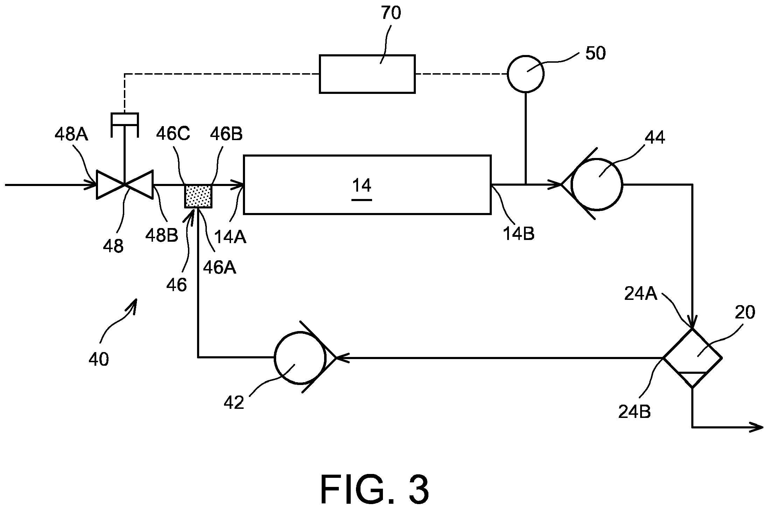

Selon un premier exemple de réalisation de l'invention, la sortie 14B et l'entrée 14A d'un compartiment anodique 14, d'une cellule électrochimique 2 (ou pile) à hydrogène, sont connectées, à l'extérieur du compartiment, par l'intermédiaire d'un circuit de purge 40 (figure 3). L'expression « éléments connectés » selon la présente demande signifie qu'un fluide peut circuler entre ces deux éléments via le circuit de purge.

Le circuit de purge peut par exemple comprendre un ou plusieurs canaux étanches au fluide qui y circule. Le circuit de purge comporte des moyens 20 formant un volume pour contenir de l'hydrogène et/ou un gaz de récupération (on désigne ci-dessous ces moyens par l'expression « capacité ») dont une première entrée 24A est destinée à être connectée à la sortie 14B du compartiment anodique 14, et une première sortie 24B est destinée à être connectée à l'entrée 14A du même compartiment. Le circuit peut être relié à des moyens d'alimentation en gaz, moyens qui ne sont pas représentés sur les figures ; le gaz fourni par ces moyens d'alimentation est de préférence un gaz ayant une très forte concentration d'hydrogène, supérieure à 99 %. Dans le cas où l'hydrogène est mélangé à un autre gaz, cet autre gaz peut-être de l'azote, et/ou du dioxyde de carbone, et/ou du méthane.

Un premier clapet anti-retour 42 est disposé an aval de la sortie 24B (dans le sens d'écoulement d'un gaz dans le circuit de purge) et est destiné à être connecté à l'entrée 14A de manière à permettre l'écoulement d'un fluide uniquement de la capacité 20 à une entrée du compartiment anodique 14.

Un second clapet anti-retour 44 est connecté en amont (dans le sens d'écoulement d'un gaz, depuis le compartiment anodique vers la capacité 20) de la première entrée 24A de la capacité, et est destiné à être connecté à la sortie 14B du compartiment anodique, de manière à permettre l'écoulement d'un fluide uniquement de cette sortie 14B vers la capacité. En d'autre termes, le premier clapet anti-retour 42 ne permet pas au fluide de s'écouler dans le circuit de purge 40, du compartiment anodique 14 à la capacité 20. Et le second clapet anti-retour ne permet pas au fluide de s'écouler, de la capacité 20 au compartiment anodique 14. Les clapets anti-retour peuvent être identiques et par exemple sont du type à soufflet, ou à bille ou à disque concentrique.

Le circuit de purge comporte des moyens 46 qui vont permettre l'entrée de gaz dans le compartiment anodique 14. Selon un exemple, ces moyens comportent un raccord 46 à trois branches, dont une première branche 46A est destinée à être connectée au premier clapet anti-retour 42, une seconde branche 46B est destinée à être connectée à l'entrée 14A du compartiment anodique et une troisième branche 46C est destinée à être connectée à une sortie 48B d'une vanne 48 à deux voies, par exemple une électrovanne. L'entrée 48A de cette vanne peut être connectée à un dispositif d'alimentation en hydrogène sous pression (non représenté).

Un capteur de pression 50 mesure la pression dans le circuit de purge 40, par exemple entre la sortie 14B du compartiment anodique et le second clapet anti-retour 44. La mesure de pression peut être effectuée en tout point du circuit de purge. Une vanne 48, de préférence une électrovanne ou une vanne « tout ou rien » pilotée, est commandée par les mesures de pression ainsi effectuées. Plus précisément, lorsque le capteur de pression détecte une pression, par exemple en sortie du compartiment anodique, supérieure à une valeur seuil, nommée seuil de pression maximum VB, la vanne 48 est fermée. Puis lorsque la mesure de pression devient inférieure à une valeur seuil, nommée seuil de pression minimale VA, la vanne 48 est ouverte.

La vanne 48 peut être commandée par des moyens 70, par exemple un micro-ordinateur ou un microprocesseur, spécialement programmé à cet effet, ou bien par un automate. La valeur du seuil de pression minimum VA et la valeur du seuil de pression maximum VB dépendent de la membrane et de la pression à la cathode. De préférence, on choisit VA et VB de sorte que la pression reste dans une plage acceptable de pression différentielle entre l'anode et la cathode, afin d'éviter un risque de dégradation mécanique de la membrane due à une pression différentielle avec la cathode trop importante.

A présent, le fonctionnement du circuit de purge 40 ci-dessus est décrit. Celui-ci est connecté à l'entrée et à la sortie du compartiment anodique d'une pile à hydrogène tel que mentionné précédemment.

Lors du fonctionnement de la pile à hydrogène, la vanne 48 et les 2 clapets 42, 44 étant à l'état fermé, la quantité d'hydrogène présente dans le compartiment anodique 14 diminue du fait de l'oxydation de l'hydrogène à l'anode et de la migration des ions oxydés dans le compartiment cathodique à travers la membrane 8.

Lorsque la différence de pression entre la capacité 20 et le compartiment anodique 14 est supérieure à la pression de tarage du premier clapet anti retour 42, celui-ci s'ouvre, le clapet 44 restant fermé. La capacité 20 contient alors un gaz, par exemple de l'hydrogène sous pression, la proportion de gaz inerte, en particulier d'azote, pouvant y atteindre 80 %. Ce gaz est nommé gaz de récupération (voir ci-dessous) et va circuler vers l'entrée du compartiment anodique 14.

La pression dans la capacité 20 (qui, d'une manière générale, est liée à, ou résulte de, l'évolution de la pression mesurée) et dans le compartiment anodique 14 va diminuer, du fait de la consommation d'hydrogène dans ce dernier. Lorsque cette pression atteint la valeur inférieure VA, ce que détecte le capteur 50, la vanne 48 est ouverte. La pression s'accroît dans le compartiment anodique 14, ce qui conduit à la fermeture du clapet anti-retour 42, le clapet 44 étant toujours fermé.

Puis, la différence de pression entre le compartiment anodique 14 et la capacité 20 conduit à l'ouverture du clapet anti-retour 44 (du fait de la pression plus élevée dans le compartiment anodique 14), le clapet 42 restant fermé.. Alors l'eau et les gaz présents dans le compartiment anodique 14 peuvent être évacués vers la capacité 20. En fait, c'est alors un front de pression qui se propage, pendant une durée de, par exemple, quelques dixièmes de secondes ou quelques secondes, par exemple encore comprise entre 0,1 s et 0.5 s, depuis l'électrovanne 48 vers la capacité 20, à travers le compartiment anodique 14. Ce front de pression est très efficace pour l'évacuation de l'eau et des gaz (comportant de l'hydrogène mais aussi, éventuellement au moins un gaz inerte, notamment de l'azote), depuis le compartiment 14 vers la capacité 20.

Lorsque la pression du compartiment anodique atteint le seuil de pression maximum VB, la vanne 48 est fermée. La pression d'hydrogène commence alors à diminuer dans le compartiment anodique 14, ce qui conduit à la fermeture du clapet 44, le clapet 42 restant fermé. Le cycle ci-dessus peut alors recommencer.

Les clapets 42, 44 subissent le cycle suivant :

- Clapet 42 fermé, clapet 44 fermé (phase de consommation d'hydrogène dans le compartiment anodique) ;
- Clapet 42 ouvert, clapet 44 fermé (introduction du gaz de récupération dans le compartiment anodique) ;
- Clapet 42 fermé, clapet 44 fermé (introduction d'hydrogène dans le compartiment anodique) ;
- Clapet 42 fermé, clapet 44 ouvert (introduction du gaz de récupération dans la capacité 20) ;
- Clapet 42 fermé, clapet 44 fermé (retour à l'état initial).

Autrement dit, dans l'exemple présenté, chaque état du circuit de purge dans lequel l'un des clapets est ouvert est précédé et suivi d'un état dans lequel les 2 clapets sont fermés.

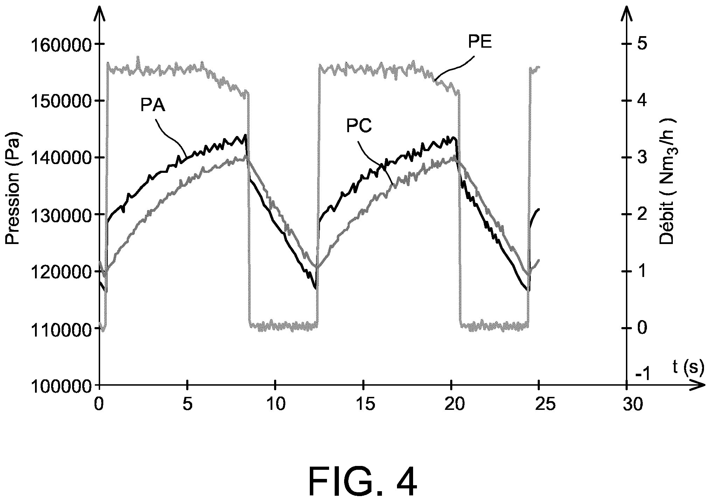

La figure 4 représente plusieurs cycles de purge tel que décrit ci-dessus, réalisés à partir d'un circuit de purge 40 connecté à une pile à hydrogène comprenant 70 compartiments anodiques. Plus précisément, la pile à hydrogène ici considérée comporte une surface active de 200 $cm^2$, le volume interne de la capacité 20 est de 12 l, le volume total des compartiments anodiques est de 0,25l, les mesures sont réalisées à une température de 343 Kelvin et une altitude de 150 m. La pile à hydrogène produit une intensité de 60A, soit un rapport de 0,30 $A/cm^2$ de surface active ; la stoechiométrie à la cathode est de $\lambda c=3$ (il y a trois fois plus d'oxygène que nécessaire). Les mesures réalisées portent sur des pressions PA mesurées par le capteur de pression 50, des variations de pression PC mesurées dans la capacité 20 et des variations de débit PE mesurées en sortie 48B de l'électrovanne 48 (figure 4).

La figure 4 montre que lors de l'ouverture de l'électrovanne 48 (à 0 seconde), un débit d'hydrogène PE, à un débit de 4,5 $Nm^3/h$, est injecté en entrée des compartiments anodiques. La pression en hydrogène dans ces compartiments augmente, ce qui permet le remplissage en hydrogène desdits compartiments et de la capacité (PA et PC, 0<t<8 secondes). Il est à noter que la pression dans la capacité est inférieure à la pression dans les compartiments anodiques, en raison de la présence du second clapet anti-retour 44 entre l'entrée 24A de la capacité et les sorties des compartiments anodiques. On observe que la vanne 48 est fermée lorsque la pression dans les compartiments anodiques est supérieure à 1,42 bar (t=8 secondes). Selon cet exemple de réalisation, cette pression correspond au seuil de pression maximum VB défini ci-dessus. La pression dans les compartiments anodiques PA chute alors en raison de la consommation en hydrogène par la pile (8<t<13 secondes). Il est à noter que lorsque la pression des compartiments anodiques passe en dessous de la pression PE mesurée dans la capacité, ces deux pressions baissent linéairement, car le premier clapet anti-retour 42 s'ouvre. La pression baisse ensuite dans ces deux enceintes jusqu'à une valeur seuil minimum (1,15 bar) mesurée par le capteur de pression 50, déclenchant de nouveau l'ouverture de la vanne 48 (à t=13s). Le débit d'hydrogène augmente de façon soudaine, créant un front de pression, fermant le premier clapet anti-retour 42 et ouvrant le second clapet anti-retour 44. On peut remarquer sur la figure 4 que l'augmentation de pression est instantanée dans les compartiments anodiques et dans la capacité lorsque l'électrovanne est ouverte. Cela montre clairement que le front de pression se propage extrêmement rapidement à travers les compartiments anodiques pour atteindre la capacité 20. Le front de pression permet d'évacuer l'eau et les gaz présents dans les compartiments anodiques de façon homogène.

Par rapport à une technique de dépressurisation telle que divulguée dans le document EP1018774A1, l'utilisation d'un front de pression permet d'entraîner plus facilement l'eau et les gaz inertes qui sont dans le compartiment 14. En effet, ce front de pression permet de réaliser une atmosphère plus dense dans le compartiment, car la pression y est alors plus élevée.

De nouveau, les compartiments anodiques et la capacité se remplissent en hydrogène (13<t<20 secondes). L'intervalle de temps entre deux ouvertures successives de la vanne 48 peut définir un cycle de purge selon l'invention, il est par exemple de l'ordre de 13 secondes selon le présent exemple.

Plus généralement, dans un circuit selon l'invention, l'intervalle de temps entre deux ouvertures successives de la vanne d'entrée 48 peut être compris entre 5s et 20s.

A présent, plusieurs variantes du circuit de purge sont décrites ci-dessous.

Les alternatives peuvent être combinées ensemble pour former d'autres exemples de réalisation de l'invention.

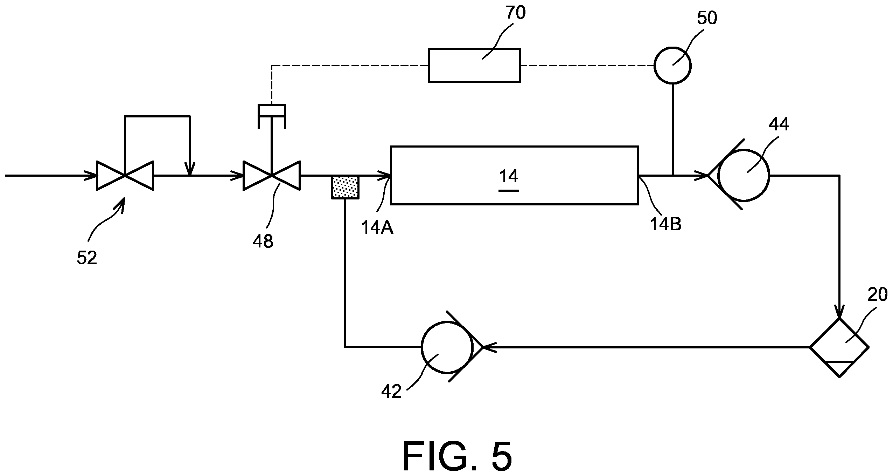

Selon une première variante, un détendeur 52 est connecté entre l'entrée 48A de l'électrovanne 48 et le dispositif d'alimentation en hydrogène pressurisé (figure 5).

Avantageusement le détendeur permet de limiter la pression dans le compartiment anodique tout en permettant des débits de gaz importants.

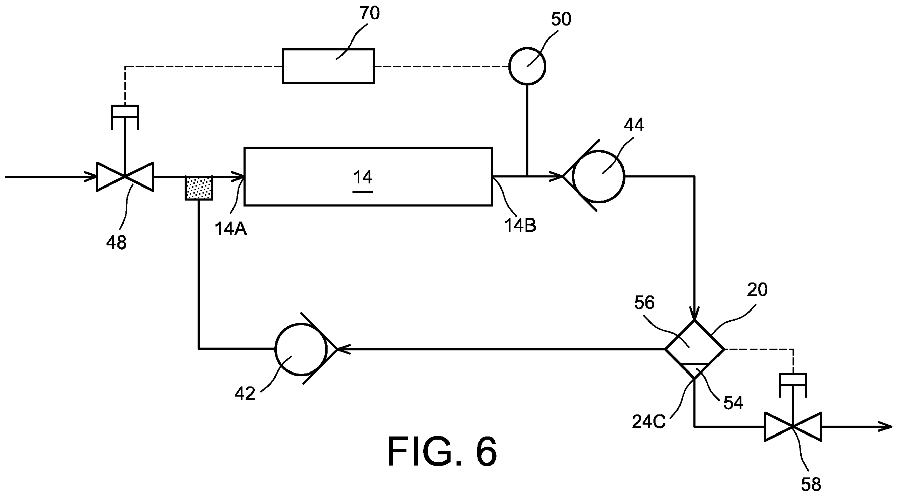

Selon une deuxième variante, la capacité 20 comporte une seconde sortie 24C, permettant d'évacuer de l'eau à l'état liquide 54 présent dans ladite capacité (figure 6). La capacité peut avoir un volume interne qui peut être par exemple compris entre 500 ml et 22 l. Il est à noter que le temps d'un cycle de purge varie notamment en fonction du volume interne disponible 56 dans la capacité. Le terme « volume interne disponible » définit un volume susceptible d'être rempli par un gaz, de préférence sous pression. Plus le volume interne disponible est important, plus le cycle de purge est long. La capacité 20 peut comporter des moyens de mesure du volume d'eau 54 présent dans le volume interne, comme par exemple un flotteur et/ou des moyens de détection de présence d'eau commandant une seconde vanne 58, par exemple une électrovanne, connectée à la seconde sortie 24C de la capacité, de manière à évacuer au moins une partie de l'eau 54 vers l'extérieur de ladite capacité.

En variante, le fonctionnement de la seconde électrovanne 58 peut être commandé par l'intermédiaire d'un dispositif (non représenté) mesurant la fréquence des cycles de purge. La fréquence des cycles de purge augmente proportionnellement au volume d'eau 54 qui est contenu dans la capacité. Ainsi, au-delà d'une fréquence seuil de cycles de purge, prédéterminée en fonction du volume interne de la capacité, l'ouverture de la seconde vanne 58 peut être commandée par le dispositif mesurant lesdites fréquences. Par exemple, un tachymètre mesure la fréquence du cycle d'ouverture et de fermeture de la vanne 48. Lorsque cette fréquence passe un niveau de seuil haut (ce qui veut dire que le volume 56 a atteint un seuil minimum acceptable, en dessous duquel on ne souhaite pas qu'il diminue), le contrôle commande, qui peut être réalisé par un automate, ou un microcontrôleur ou un ordinateur ouvre la vanne 58 ce qui purge une partie, ou la totalité, de l'eau présente dans le récupérateur 20. Cette évacuation augmente le volume 56 qui a pour effet d'abaisser la fréquence de cycles d'ouverture et de fermeture de la vanne 48. Lorsque cette fréquence, mesurée par le tachymètre, passe sous un seuil bas, c'est que le volume d'eau 54 a atteint une valeur minimale cible acceptable. La vanne 58 est alors fermée.

La seconde vanne 58 permet de modifier à volonté la fréquence des cycles de purge en contrôlant le volume d'eau 54 présent dans la capacité. Les dispositifs ci-dessus permettent également d'évacuer uniquement l'eau présente à l'état liquide de la capacité, sans relâcher dans l'environnement l'hydrogène ou le gaz de récupération présent dans le volume interne disponible 56.

Selon une 3ème variante, le circuit de purge 40 peut comporter un second capteur de pression mesurant la pression dans le compartiment cathodique, ou à son aval ou à son amont, de manière à connaître la différence de pression entre le compartiment anodique 14 et le compartiment cathodique 16. L'électrovanne 48 peut être ouverte ou fermée également en fonction de la différence de pression entre ces deux compartiments, de manière à éviter des sollicitations mécaniques trop importantes de la membrane susceptibles de l'endommager. Avec l'aide de ces deux capteurs, une mesure différentielle entre le compartiment anodique et le compartiment cathodique est réalisée. L'électrovanne 48 est ouverte afin de faire évoluer la pression mesurée par le capteur 50 de façon à ce que la pression différentielle entre l'anode et la cathode atteigne un premier seuil, dit seuil de saturation haut. Ce premier seuil atteint, la fermeture des moyens 48 alimentant le compartiment anodique est ordonnée. La pression différentielle entre l'anode et la cathode chute jusqu'à atteindre un deuxième seuil, dit seuil de saturation bas, commandant la réouverture des moyens 48.

Selon une 4ème variante, les pressions de tarage des clapets anti-retour 42 et 44 sont les plus faibles possibles, de manière à pouvoir utiliser au maximum les variations de pression autorisées par la membrane 8. Chacune de ces pressions de tarage est par exemple comprise entre 5 mbar et 50 mbar.

Dans les modes de réalisation et exemples décrits ci-dessus, le capteur de pression est disposé de manière à mesurer la pression entre la sortie du compartiment anodique et le second clapet anti retour 44. Cependant, en variante, la mesure de pression peut être réalisée en tout endroit de la ligne des gaz. Par exemple, elle peut être réalisée entre les clapets anti retour, ou encore dans le réservoir 20. Le fonctionnement décrit ci-dessus reste le même. En outre, toutes les variantes décrites ci-dessus sont applicables.

En conclusion, la présente demande porte sur un circuit de recirculation permettant de réintroduire de l'hydrogène, sortant d'un compartiment anodique, dans ce compartiment.

La sortie d'un compartiment anodique est connectée à l'entrée du circuit de purge, dont la sortie rejoint l'entrée du compartiment anodique. Le circuit de recirculation comporte avantageusement une capacité 20, dont le volume interne disponible 56 peut être contrôlé en purgeant l'eau liquide 54 présente dans ladite capacité. De cette façon, la fréquence des cycles de purge peut être contrôlée.

Les durées des différentes étapes d'un cycle de purge peuvent être fixées par une relation entre le courant de la pile, le volume interne de la capacité et le volume du compartiment anodique, les seuils de pression d'ouverture et de fermeture de la vanne et la pression de tarage des clapets anti-retours. En particulier :

- plus le courant est important et plus de l'hydrogène est consommé, et donc plus la pression chute vite et est longue à remonter ;
- plus les volumes sont importants, plus leurs durées de remplissage et de vidange sont importantes ;
- plus les deux seuils sont proches, et plus rapidement ils sont atteints, et plus le cycle est court ;
- plus la pression de tarage est grande, et moins souvent les clapets seront ouverts ; cela raccourcira le temps de cycle.

D'autre part, le volume d'eau liquide 54 contenu dans la capacité 20 peut être connu en fonction de la fréquence des cycles de purge : de ce fait, la purge en eau de la capacité 20 peut être réalisée sans rejet d'hydrogène dans l'environnement. L'ouverture et la fermeture de la seconde électrovanne 58 peuvent être commandées de manière à évacuer une quantité d'eau liquide égale ou inférieure à l'eau liquide présente dans la capacité. Il est ainsi possible de limiter les pertes d'hydrogène lors de la purge de la capacité.

L'invention permet également de contrôler les déformations mécaniques s'exerçant sur la membrane 8 lors des cycles de purge : la fréquence de ces cycles peut avantageusement être adaptée de manière à ne pas dégrader de façon irréversible les propriétés mécaniques de la membrane.

Un autre avantage lié à l'invention est qu'il n'est pas nécessaire d'employer des dispositifs de type compresseur ou pompe pour faire circuler l'hydrogène dans le circuit de purge 40. L'invention offre donc l'avantage de ne pas entraîner de surcoût en énergie puisque le circuit de purge 40 ne comporte pas de pompe. De ce fait, les performances de la pile sont moins affectées par les variations de pression dans le compartiment anodique dues au circuit de purge, le poids de la pile est allégé et son encombrement est diminué par rapport à un circuit de purge comprenant un compresseur.

## Revendications

1. Circuit de purge (40) pour purger un compartiment anodique (14) d'une cellule électrochimique (2) d'une pile à combustible (1), ce circuit comportant :

   - des moyens (20), formant un volume connexe d'au moins égal à 300 ml, pour contenir et homogénéiser un gaz de récupération, comprenant une première entrée (24A) et une première sortie (24B) ;
   - un premier clapet anti-retour (42) connecté à la première sortie (24B) des moyens (20) pour contenir un gaz de récupération de manière à empêcher l'introduction d'un gaz dans ces moyens (20) par la première sortie (24B) et à permettre la circulation d'une partie d'un gaz, depuis la première sortie (24B) vers une entrée du compartiment anodique (14) ;
   - un second clapet anti-retour (44) connecté à la première entrée (24A) des moyens (20) pour contenir un gaz de récupération, de manière à empêcher l'évacuation d'un gaz, à partir de ces moyens (20), par la première entrée (24A) ;
   - un capteur de pression (50) apte à mesurer la pression d'un fluide présent dans ledit circuit, par exemple une pression entre une sortie (14B) dudit compartiment anodique et le second clapet anti retour (44);
   - des moyens (46, 48) permettant ou interdisant une circulation d'un gaz d'alimentation dudit compartiment (14) vers son entrée, en fonction de données de pression dudit capteur de pression (50) et permettant la circulation de gaz de récupération, depuis le premier clapet anti-retour (42) vers l'entrée du compartiment anodique (14).

2. Circuit de purge (40) selon la revendication 1, lesdits moyens (48) permettant une circulation d'un gaz d'alimentation vers l'entrée dudit compartiment (14), comportant une vanne (48), ou une électrovanne, ladite vanne ou ladite électrovanne ayant une entrée (48A) et une sortie (48B).

3. Circuit de purge (40) selon l'une des revendications 1 ou 2, lesdits moyens (46, 48) permettant ou interdisant une circulation d'un gaz d'alimentation dudit compartiment (14) vers son entrée comportant un raccord (46) comprenant une première branche (46A) connectée au premier clapet anti-retour (42), une deuxième branche (46B) et une troisième branche (46C), lesdits moyens (48) permettant une circulation d'un gaz d'alimentation vers l'entrée dudit compartiment (14) étant connectés à la troisième branche (46C) du raccord (46), l'entrée (14A) dudit compartiment anodique étant par exemple connectée à la seconde branche (46B) du raccord (46), de manière à permettre à un gaz sortant du compartiment anodique d'être réintroduit dans ledit compartiment par l'intermédiaire du circuit de purge (40).

4. Circuit de purge (40) selon l'une des revendications 1 à 3, les moyens (48) permettant ou interdisant une circulation d'un gaz d'alimentation vers l'entrée dudit compartiment (14) :

   - permettant une circulation du gaz d'alimentation vers l'entrée dudit compartiment (14), pour y augmenter la pression et/ou lorsque le capteur de pression (50) mesure une pression inférieure à un seuil minimum (VA) et/ou quand une pression mesurée par le capteur de pression (50) augmente,
   - ne permettant pas une circulation du gaz d'alimentation vers l'entrée dudit compartiment (14), pour y diminuer la pression et/ou lorsque le capteur de pression (50) mesure une pression supérieure à un seuil maximum (VB), qui est supérieure à la pression de seuil minimum (VA) et/ou quand la pression mesurée par le capteur de pression (50) diminue.

5. Circuit de purge (40) selon l'une des revendications précédentes, un détendeur (52) étant connecté en amont de l'entrée (48A) des moyens (48) permettant ou interdisant une circulation d'un gaz vers l'entrée dudit compartiment.

6. Circuit de purge (40) selon l'une des revendications précédentes, les moyens (20) pour contenir un gaz de récupération comportant une seconde sortie (24C) pour évacuer au moins une partie de l'eau à l'état liquide (54) présente dans ces moyens (20).

7. Circuit de purge (40) selon la revendication précédente, comportant en outre des moyens de mesure du volume d'eau liquide (54) présent dans lesdits moyens (20) pour contenir un gaz de récupération et/ou des moyens (58), par exemple une seconde vanne ou une électrovanne (58), pour commander ladite seconde sortie (24C).

8. Circuit de purge (40) selon la revendication 7, comportant des moyens pour mesurer la fréquence de cycles de purge et pour commander le fonctionnement desdits moyens (58) pour commander ladite seconde sortie (24C) en fonction de cette fréquence et/ou lesdits moyens (58) pour commander ladite seconde sortie (24C) permettant de commander celle-ci sans relâcher dans l'environnement un gaz de récupération présent dans lesdits moyens (20) pour contenir un gaz de récupération.

9. Circuit de purge (40) selon l'une des revendications 1 à 8, comportant en outre un second capteur de pression mesurant la pression dans un compartiment cathodique appartenant à la même cellule électrochimique (2) que ledit compartiment anodique, lesdits moyens (48), permettant ou interdisant une circulation d'un gaz d'alimentation vers l'entrée dudit compartiment (14), en fonction de données de pression dudit capteur de pression (50), étant par exemple commandés en fonction de la différence de pression entre le compartiment anodique et le compartiment cathodique.

10. Circuit de purge (40) selon l'une des revendications 1 à 9, connectant plusieurs sorties et plusieurs entrées de plusieurs compartiments anodiques appartenant à une pile à combustible comprenant plusieurs cellules électrochimiques et/ou comportant en outre un dispositif d'alimentation en combustible sous pression comprenant de l'hydrogène.

11. Procédé de fonctionnement d'un circuit selon l'une des revendications 1 à 10, comportant :

   - la mesure de la pression d'un fluide présent dans ledit circuit de purge, par exemple en amont du second clapet anti-retour (44) ;
   - une circulation d'un gaz vers l'entrée dudit compartiment (14), en fonction de données de pression dudit capteur de pression (50).

12. Procédé selon la revendication 11, le compartiment étant alimenté en gaz de récupération lorsque la pression des gaz de récupération est supérieure à la pression dans ledit compartiment anodique (14), le premier clapet anti-retour étant alors ouvert et/ou les moyens permettant une circulation d'un gaz vers l'entrée dudit compartiment étant ouverts lorsque la pression dans le compartiment et dans les moyens (20) pour contenir le gaz de récupération passe en dessous d'une valeur de pression dite minimum.

13. Procédé selon la revendication 12, une variation de pression provoquée par l'ouverture des moyens permettant une circulation d'un gaz vers l'entrée dudit compartiment provoquant la fermeture du premier clapet anti-retour et/ou l'ouverture du second clapet anti-retour et/ou une évacuation d'eau et de gaz présents dans le compartiment anodique.

14. Procédé selon l'une des revendications 12 ou 13, comportant une fermeture du second clapet anti-retour avant que les pressions ne s'équilibrent dans les moyens pour contenir le gaz de récupération et dans le compartiment anodique.

15. Procédé selon l'une des revendications 12 à 14, comportant une fermeture des moyens (48), interdisant une circulation d'un gaz vers l'entrée dudit compartiment lorsque la pression, détectée par le capteur de pression, est supérieure à un seuil de pression prédéterminée, dite pression maximum VB.

**Patentansprüche**

1. Spülkreislauf (40) zum Spülen einer Anodenkammer (14) einer elektrochemischen Zelle (2) einer Brennstoffzelle (1), wobei der Kreislauf umfasst:

   - Mittel (20), welche ein verbundenes Volumen von wenigstens 300 ml zum Aufnehmen und Homogenisieren eines Rückgewinnungsgases bilden, umfassend einen ersten Eingang (24A) und einen ersten Ausgang (24B);
- ein erstes Rückschlagventil (42) welches mit dem ersten Ausgang (24B) der Mittel (20) zum Aufnehmen eines Rückgewinnungsgases verbunden ist, um die Einführung eines Gases in diese Mittel (20) durch den ersten Eingang (24B) zu verhindern und die Zirkulation eines Teils eines Gases von dem ersten Eingang (24B) zu einem Eingang der Anodenkammer (14) zu ermöglichen;
- ein zweites Rückschlagventil (44) welches mit dem ersten Eingang (24A) der Mittel (20) zum Aufnehmen eines Rückgewinnungsgases verbunden ist, um die Ausleitung eines Gases von diesen Mitteln (20) durch den ersten Ausgang (24A) zu verhindern;
- einen Drucksensor (50), welcher in der Lage ist, den Druck eines in diesem Kreislauf vorhandenen Fluids zu messen, beispielsweise einen Druck zwischen einem Ausgang (14B) der Anodenkammer und dem zweiten Rückschlagventil (44);
- Mittel (46, 48), welche eine Zirkulation eines Zuführgases der Kammer (14) zu ihrem Eingang abhängig von Druckdaten des Drucksensors (50) erlauben oder untersagen und die Zirkulation von Rückgewinnungsgas von dem ersten Rückschlagventil (42) zum Eingang der Anodenkammer (14) erlauben.

2.  Spülkreislauf (40) nach Anspruch 1, wobei die Mittel (48) eine Zirkulation eines Zuführgases zum Eingang der Kammer (14) erlauben, umfassend ein Ventil (48) oder ein Elektroventil, wobei das Ventil oder das Elektroventil einen Eingang (48A) und einen Ausgang (48B) aufweisen.

3.  Spülkreislauf (40) nach einem der Ansprüche 1 oder 2, wobei die Mittel (46, 48), welche eine Zirkulation eines Zuführgases von der Kammer (14) zu ihrem Eingang erlauben oder untersagen, eine Verbindung (46) umfassen, welche einen ersten mit dem ersten Rückschlagventil (42) verbundenen Zweig (46A), einen zweiten Zweig (46B) und einen dritten Zweig (46C) umfassen, wobei die Mittel (48), die eine Zirkulation eines Zuführgases zu dem Eingang der Kammer (14) erlauben, mit dem dritten Zweig (46C) der Verbindung (46) verbunden sind, wobei der Eingang (14A) der Anodenkammer beispielsweise mit dem zweiten Zweig (46B) der Verbindung (46) derart verbunden ist, dass ein die Anodenkammer verlassendes Gas mittels des Spülkreislaufes (40) in die Kammer zurück geführt werden kann.

4.  Spülkreislauf (40) nach einem der Ansprüche 1 bis 3, wobei die Mittel (48), welche eine Zirkulation eines Zuführgases der Kammer (14) zu ihrem Eingang erlauben oder untersagen:

    - eine Zirkulation des Zuführgases zum Eingang der Kammer (14) erlauben, um dort den Druck zu erhöhen und/oder, wenn der Drucksensor (50) einen Druck unterhalb eines Minimums (VA) misst, und/oder wenn ein von dem Drucksensor (50) gemessener Druck ansteigt,
    - keine Zirkulation des Zuführgases zum Eingang der Kammer (14) erlauben, um dort den Druck zu verringern und/oder, wenn der Drucksensor (50) einen Druck oberhalb eines Maximums (VB) misst, der größer als das Druckminimum (VA) ist, und/oder wenn der von dem Drucksensor (50) gemessener Druck sinkt.

5.  Spülkreislauf (40) nach einem der vorangehenden Ansprüche, wobei ein Druckminderer (52) stromaufwärts des Eingangs (48A) der Mittel (48) angeschlossen ist, der eine Zirkulation eines Gases zum Eingang der Kammer erlaubt oder untersagt.

6.  Spülkreislauf (40) nach einem der vorangehenden Ansprüche, wobei die Mittel (20) zum Aufnehmen eines Rückgewinnungsgases einen zweiten Ausgang (24C) umfassen, um wenigstens einen Teil des in diesen Mitteln (20) vorhandenen Wassers im flüssigen Zustand (54) auszuleiten.

7.  Spülkreislauf (40) nach dem vorangehenden Anspruch, welcher ferner Mittel zum Messen des Volumens des in diesen Mitteln (20) vorhandenen flüssigen Wassers (54) umfasst, um ein Rückgewinnungsgas aufzunehmen, und/oder Mittel (58), beispielsweise ein zweites Ventil oder Elektroventil (58) zum Steuern des zweiten Ausgangs (24C).

8.  Spülkreislauf (40) nach Anspruch 7, welcher Mittel zum Messen der Frequenz der Spülzyklen und zur Steuerung des Betriebs dieser Mittel (58) umfasst, zum Steuern des zweiten Ausgangs (24C) abhängig von dieser Frequenz und/oder wobei die Mittel (58) zum Steuern des zweiten Ausgangs (24C) dessen Steuerung ermöglichen, ohne ein in diesen Mitteln (20) zum Aufnehmen eines Rückgewinnungsgases vorhandenes Rückgewinnungsgas in die Umgebung freizusetzen.

9.  Spülkreislauf (40) nach einem der Ansprüche 1 bis 8, welcher ferner einen zweiten Drucksensor umfasst, der den Druck in einer Kathodenkammer misst, die zu derselben elektrochemischen Zelle (2) gehört wie die Anodenkammer, wobei die Mittel (48), welche eine Zirkulation des Zuführgases zum Eingang der Kammer (14) abhängig von Druckdaten des Drucksensors (50) erlauben oder untersagen, beispielsweise abhängig von der Druckdifferenz zwischen der Anodenkammer und der Kathodenkammer gesteuert werden.

10. Spülkreislauf (40) nach einem der Ansprüche 1 bis 9, welcher mehrere Ausgänge und mehrere Eingänge mehrerer Anodenkammern verbindet, die zu einer Brennstoffzelle mit mehreren elektrochemischen Zellen gehören, und/oder eine Vorrichtung für die Zufuhr von Brennstoff unter Druck, umfassend Wasserstoff, aufweist.

11. Verfahren zum Betreiben eines Kreislaufs nach einem der Ansprüche 1 bis 10, umfassend:

    - die Messung des Drucks eines in dem Spülkreislauf vorhandenen Fluids, beispielsweise stromaufwärts des zweiten Rückschlagventils (44);
    - eine Zirkulation eines Gases zum Eingang der Kammer (14) abhängig von Druckdaten des Drucksensors (50).

12. Verfahren nach Anspruch 11, wobei der Kammer ein Rückgewinnungsgas zugeführt wird, wenn der Druck des Rückgewinnungsgases größer ist als der Druck in der Anodenkammer (14), wobei das erste Rückschlagventil dann geöffnet wird und/oder wobei die Mittel, die eine Zirkulation eines Gases zum Eingang der Kammer erlauben, geöffnet werden, wenn der Druck in der Kammer und in den Mitteln (20) zur Aufnahme eines Rückgewinnungsgases unter einen sogenannten minimalen Druckwert fällt.

13. Verfahren nach Anspruch 12, wobei eine durch das Öffnen der Mittel, die eine Zirkulation eines Gases zum Eingang der Kammer erlauben, hervorgerufene Druckschwankung die Schließung des ersten Rückschlagventils und/oder die Öffnung des zweiten Rückschlagventils bewirkt und/oder eine Ausleitung von in der Anodenkammer vorhandenem Wasser und Gas.

14. Verfahren nach einem der Ansprüche 12 oder 13, umfassend eine Schließung des zweiten Rückschlagventils bevor sich die Drücke in den Mitteln zum Aufnehmen des Rückgewinnungsgases und in der Anodenkammer ausgleichen.

15. Verfahren nach einem der Ansprüche 12 bis 14, umfassend eine Schließung der Mittel (48), was eine Zirkulation eines Gases zum Eingang der Kammer untersagt, wenn der von dem Drucksensor erfasste Druck größer ist als ein zuvor festgelegter Druckschwellenwert, auch Maximaldruck VB genannt.

## Claims

1. A purging circuit (40) for purging an anodic compartment (14) of an electrochemical cell (2) of a fuel cell (1), this circuit including:

    - means (20), forming a volume, having connexity, of at least equal to 300 ml, for containing and homogenising a recovery gas, comprising a first inlet (24A) and a first outlet (24B);
    - a first nonreturn valve (42) connected to the first outlet (24B) of the means (20) for containing a recovery gas so as to prevent a gas from being introduced into these means (20) through the first outlet (24B) and allow a part of a gas to be flown, from the first outlet (24B) to an inlet of the anodic compartment (14);
    - a second nonreturn valve (44) connected to the first inlet (24A) of the means (20) for containing a recovery gas, so as to prevent a gas from being discharged, from these means (20), through the first inlet (24A);
    - a pressure sensor (50) able to measure the pressure of a fluid present in said circuit, for example a pressure between an outlet (14B) of said anodic compartment and the second nonreturn valve (44);
    - means (46, 48) allowing a supply gas of said compartment (14) to be flown or prohibiting it from being flown to its inlet, as a function of pressure data from said pressure sensor (50) and allowing gas to be flown, from the first nonreturn valve (42) to an inlet of the anodic compartment (14).

2. The purging circuit (40) according to claim 1, said means (48) allowing a gas to be flown from to the inlet of said compartment (14), including a valve (48), or a solenoid valve, having an inlet (48A) and an outlet (48B).

3. The purging circuit (40) according to one of claims 1 or 2, said means (46, 48) allowing a supply gas of said compartment (14) to be flown or prohibiting it from being flown to its inlet, including a connector (46) comprising a first branch (46A) connected to the first nonreturn valve (42), a second branch (46B) and a third branch (46C), said means (48) allowing a gas to be flown to the inlet of said compartment (14) being connected to the third branch (46C) of the connector (46), the inlet (14A) of said anodic compartment being for example connected to the second branch (46B) of the connector (46), so as to allow a fluid outflowing from the anodic compartment to be reintroduced into said compartment through the purging circuit (40).

4. The purging circuit (40) according to one of claims 1 to 3, the means (48) allowing a gas to be flown or prohibiting it from being flown to the inlet of said compartment (14):

- allowing a gas to be flown to the inlet of said compartment (14), to increase the pressure therein and/or when the pressure sensor (50) measures a pressure lower than a minimum threshold (VA), and/or when the pressure measured by the pressure sensor (50) increases,
- not allowing a gas to be flown to the inlet of said compartment (14), to decrease the pressure therein and/or when the pressure sensor (50) measures a pressure higher than a maximum threshold (VB), which is higher than the minimum threshold pressure (VA) and/or when the pressure measured by the pressure sensor (50) decreases.

5. The purging circuit (40) according to one of the preceding claims, a pressure reducer (52) being connected upstream of the inlet (48A) of the means (48) allowing a gas to be flown or prohibiting it from being flown to the inlet of said compartment.

6. The purging circuit (40) according to one of the preceding claims, the means (20) for containing a recovery gas including a second aperture (24C) for discharging at least part of the liquid state water (54) present in these means (20).

7. The purging circuit (40) according to the preceding claim, further including means for measuring the volume of the liquid water (54) present in said means (20) for containing a recovery gas and/or means (58), for example a second valve, or a solenoid valve (58), for controlling said second aperture (24C) .

8. The purging circuit (40) according to claim 7, including means for measuring the frequency of purging cycles and for controlling the operation of said means (58) for controlling said second aperture (24C) as a function of this frequency and/or said means (58) for controlling said second aperture (24C) allowing this to be controlled without releasing in the environment a recovery gas present in said means (20) for containing a recovery gas.

9. The purging circuit (40) according to one of claims 1 to 8, further including a second pressure sensor measuring the pressure in a cathodic compartment belonging to the same electrochemical cell (2) as said anodic compartment, said means (48), allowing a gas to be flown or prohibiting it from being flown to the inlet of said compartment (14), as a function of pressure data of said pressure sensor (50), being for example controlled as a function of the pressure difference between the anodic compartment and the cathodic compartment.

10. The purging circuit (40) according to one of claims 1 to 9, connecting several outlets and several inlets of several anodic compartments belonging to a fuel cell comprising several electrochemical cells and/or further including a device for supplying a pressurised fuel comprising hydrogen.

11. A method for operating a circuit according to one of claims 1 to 10, including:

- measuring the pressure of a fluid present in said purging circuit, for example upstream of the second nonreturn valve (44);
- flowing a gas to the inlet of said compartment (14), as a function of pressure data of said pressure sensor (50).

12. The method according to claim 11, the compartment being supplied with recovery gas when the pressure of the recovery gases is higher than the pressure in said anodic compartment (14), the first nonreturn valve being thereby open and/or the means allowing a gas to be flown to the inlet of said compartment being open when the pressure in the compartment and in the means (20) for containing the recovery gas comes below a so-called minimum pressure value.

13. The method according to claim 12, a pressure variation caused by the opening of the means allowing a gas to be flown to the inlet of said compartment causing the first nonreturn valve to be closed and/or the second nonreturn valve to be open and/or causing water and gas present in the anodic compartment to be discharged.

**14.** The method according to one of claims 12 or 13, including closing the second nonreturn valve before the pressures are balanced in the means for containing the recovery gas and in the anodic compartment.

**15.** The method according to one of claims 12 or 13, including closing the means (48), prohibiting a gas from being flown to the inlet of said compartment when the pressure, detected by the pressure sensor, is higher than a predetermined pressure threshold, called a maximum pressure VB.

## FIG. 1

## FIG. 2

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1018774 A1
- JP 2010232167 A
- FR 2826782
- US 2009075128 A